# EUROPEAN PATENT SPECIFICATION

(11) **EP 2 998 359 B1**
(45) Date of publication and mention of the grant of the patent: **21.08.2019**
(21) Application number: 14797511.4
(22) Date of filing: 15.05.2014
(51) Int. Cl.: C08L 67/02, C08J 5/00, C08K 5/43, C08K 5/47

(54) **METHOD FOR IMPROVING THE ELECTRICAL-INSULATING PROPERTY AND THE FOGGING RESISTANCE OF A POLYESTER RESIN COMPOSITION**
VERFAHREN ZUR VERBESSERUNG DER STROMISOLIERENDEN EIGENSCHAFTEN UND DER BESCHLAGBESTÄNDIGKEIT EINER POLYESTERHARZZUSAMMENSETZUNG
PROCÉDÉ POUR AMÉLIORER LA PROPRIÉTÉ D'ISOLATION ÉLECTRIQUE ET LA RÉSISTANCE À L'EMBUAGE D'UNE COMPOSITION DE RÉSINE POLYESTER

(30) Priority: 17.05.2013 JP 2013105418
(43) Date of publication of application: 23.03.2016
(73) Proprietor: Adeka Corporation, Tokyo 116-0012 (JP)
(72) Inventor: URUSHIHARA Tsuyoshi, Saitama-shi Saitama 336-0022 (JP); YAMADA Shingo, Saitama-shi Saitama 336-0022 (JP); HATANAKA Tomoyuki, Saitama-shi Saitama 336-0022 (JP)
(74) Representative: Gill Jennings & Every LLP
(86) International application number: PCT/JP2014/062930
(87) International publication number: WO 2014/185484

(56) References cited:
- WO-A1-2010/066095
- WO-A1-2011/040337
- WO-A1-2012/073904
- WO-A1-2012/073904
- US-A1- 2009 176 913
- US-A1- 2012 189 793

## Description

### TECHNICAL FIELD

The present invention relates to the use of a sulfonamide compound metal salt for improving the electrical insulating properties and fogging resistance of a polyester resin composition.

### BACKGROUND ART

Polyester resins such as polybutylene terephthalate resins (hereinafter, may also be described as "PBT resin(s)") have excellent and advantageous features in terms of dynamic strength, electrical properties, weather resistance, water resistance, chemical resistance, solvent resistance, dimensional stability and moldability and are thus utilized as engineering plastics in various applications. Meanwhile, as the fields of application expand, it has been demanded that the physical properties such as dynamic strength be improved and molded articles thereof have good outer appearance.

However, depending on the use environment, there is a problem that PBT resins cause fogging and impair the outer appearance of a molded article. Fogging is generally caused by a plastic composition, and a volatile compound vaporized by an increased temperature of the external environment precipitates under a cold environment. Particularly, the occurrence of fogging in a transparent material is not preferable.

As measures for inhibiting such fogging, for example, Patent Document 1 proposes a resin composition in which a polycarbonate and a fine powder filler are incorporated into a PBT resin, and Patent Document 2 proposes a method of using a fine powder filler as a reinforcing material in a resin composition composed of a polyalkylene terephthalate-based resin, a polycarbonate resin, a silicone oil and an organic nucleating agent. In addition, Patent Document 3 proposes to incorporate a hindered phenol-based compound or a hydrazine skeleton-containing compound. Moreover, Patent Document 4 proposes a method of preparing a resin composition by blending a PBT resin with a thermoplastic polyester that is different from the PBT resin and a vinyl-based thermoplastic resin at a specific ratio.

In Patent Documents 5 to 8, for the purpose of improving the crystallization rate of polyester resins such as polyethylene terephthalate, the present inventors have proposed to incorporate a sulfonamide compound metal salt as a nucleating agent of a polyester resin.

Further, since PBT resins have excellent electrical insulating properties, they are utilized as insulating materials in electrical/electronic components and the like. However, it has been indicated that exposure of a PBT resin to such an environment that involves an increase in temperature causes a reduction in the electrical insulation over time. In addition, it has also been indicated that, when a PBT resin is subjected to a high temperature and a high energy of arc discharge or the like, a phenomenon of deterioration of insulation is likely to occur. A marked deterioration in the electrical insulating properties of a PBT resin makes arc discharge likely to occur between the PBT resin and its surrounding conductor, and this poses a concern for fire. Thus far, as a measure for inhibiting such deterioration of the electrical insulating properties, for example, Patent Document 9 has proposed a resin composition in which an inorganic filler and an epoxy resin are incorporated into a PBT resin.

### RELATED ART DOCUMENTS

### PATENT DOCUMENTS

Patent Document 1: Japanese Unexamined Patent Application Publication No. H11-101905
Patent Document 2: Japanese Unexamined Patent Application Publication No. H11-241006
Patent Document 3: Japanese Unexamined Patent Application Publication No. 2012-057152
Patent Document 4: Japanese Unexamined Patent Application Publication No. 2011-133523
Patent Document 5: WO2007/129527
Patent Document 6: WO2008/038465
Patent Document 7: WO2009/116499
Patent Document 8: WO2011/040337
Patent Document 9: Japanese Unexamined Patent Application Publication No. H9-87495

### SUMMARY OF THE INVENTION

### PROBLEMS TO BE SOLVED BY THE INVENTION

However, in the methods described in Patent Documents 1 and 2, mixing of a resin different from a PBT resin impairs the intrinsic physical properties of the resin and the fogging-inhibiting effect is not sufficient. In Patent Document 3, coloration caused by an additive incorporated into the resulting PBT resin composition is observed and the fogging-inhibiting effect is not satisfactory. Further, in the method described in Patent Document 4, there are cases where incorporation of a resin different from a PBT resin impairs the intrinsic physical properties of the PBT resin. Moreover, Patent Documents 5 to 8 offer no description at all with regard to the effect of inhibiting fogging of a PBT injection-molded article. Furthermore, when a method described in Patent Document 9 is used as a measure against deterioration of electrical insulating properties, since incorporation of an inorganic filler may disturb the surface of the resulting molded article and the molded article may thus have impaired outer appearance, there are problems that, for example, the molded article is severely affected by arc discharge.

In view of the above, an object of the present invention is to provide a sulfonamide compound metal salt for improving the electrical insulation properties and fogging resistance of a polyester resin composition comprising a polybutylene terephthalate resin.

### MEANS FOR SOLVING THE PROBLEMS

That is, use of a sulfonamide compound metal salt for improving the electrical insulation properties and fogging resistance of a polyester resin composition, such that the polyester resin composition comprises 0.001 to 1.0 part by mass of said sulfonamide compound metal salt with respect to 100 parts by mass of a polyester resin, wherein the polyester resin comprises not less than 50% by mass of a polybutylene terephthalate.

It is preferred that the sulfonamide compound metal salt be a sodium salt of 1 ,2-benzisothiazol-3(2*H*)-one-1,1-dioxide.

The polyester resin composition may be formed into a molded article. The molded article may be an insulating material.

The insulating material can be suitably used in an electrical/electronic component.

### EFFECTS OF THE INVENTION

According to the present invention, use of a sulfonamide compound metal salt for improving the electrical insulating properties and fogging resistance of a polyester resin composition can be provided.

### MODE FOR CARRYING OUT THE INVENTION

The use of a sulfonamide compound metal salt of the present invention obtains a polyester resin composition comprising 0.001 to 1.0 part by mass of a sulfonamide compound metal salt with respect to 100 parts by mass of a polyester resin comprising not less than 50% by mass of a polybutylene terephthalate. In the polyester resin composition, fogging can be inhibited without deteriorating the properties of the polyester resin composition, and an injection-molded article having excellent electrical insulating properties can be produced therefrom.

First, the polyester resin composition will be described in detail below.

The term "a sulfonamide compound metal salt" according to the present invention means a metal salt of a compound having a sulfonamide skeleton. Examples of the compound having a sulfonamide skeleton include sulfonamide, methanesulfonamide, benzenesulfonamide, toluene-4-sulfonamide, 4-chlorobenzenesulfonamide, 4-aminobenzenesulfonamide, *N*-butyl-4-methyl-benzenesulfonamide, *N*-phenyl-benzenesulfonamide, *N*-phenyl-4-methyl-benzenesulfonamide, 4-amino-*N*-pyridine-2-ylbenzenesulfonamide, 4-amino-*N*-(5-methyl-thiazol-2-yl)-benzenesulfonamide, 4-amino-*N*-thiazol-2-yl-benzenesulfonamide, 4-amino-*N*-(5-methyl-isoxazol-3-yl)-benzenesulfonamide, 4-amino-*N*-(2,6-dimethoxy-pyrimidine-4-yl)-benzenesulfonamide, 1,2-benzisothiazol-3(2*H*)-one-1,1-dioxide, 4-amino-6-chloro-benzene-1,3-disulfonic acid diamide, 6-ethoxy-benzothiazol-2-sulfonic acid amide, 5-dimethylamino-naphthalene-1-sulfonic acid amide, 4-sodiumoxy-benzenesulfonamide and *N*-(4-benzenesulfonylamino-phenyl)-benzenesulfonamide.

The metal of the sulfonamide compound metal salt is, for example, a metal selected from lithium, potassium, sodium, magnesium, calcium, strontium, barium, titanium, manganese, iron, zinc, silicon, zirconium, yttrium and barium. Thereamong, potassium, lithium and sodium are preferred because of their excellent effect of facilitating crystallization of the polyester resin, and sodium is particularly preferred.

In the present invention, a metal salt of benzenesulfonamide, a metal salt of toluene-4-sulfonamide, a metal salt of *N*-phenyl-benzenesulfonamide, a metal salt of *N*-phenyl-4-methyl-benzenesulfonamide or a metal salt of 1,2-benzisothiazol-3(2*H*)-one-1,1-dioxide is preferably used.

The polybutylene terephthalate used in the polyester resin composition can be produced by polymerizing terephthalic acid and 1,4-butanediol as main materials. In this process, other dicarboxylic acid or diol component can also be copolymerized in accordance with the intended purpose.

Examples of the dicarboxylic acid component other than terephthalic acid include aromatic dicarboxylic acids such as phthalic acid, isophthalic acid, 4,4'-diphenyldicarboxylic acid, 4,4'-diphenyl ether dicarboxylic acid, 4,4'-diphenoxyethane dicarboxylic acid, 4,4'-diphenylsulfone dicarboxylic acid and 2,6-naphthalene dicarboxylic acid; alicyclic dicarboxylic acids such as 1,2-cyclohexane dicarboxylic acid, 1,3-cyclohexane dicarboxylic acid and 1,4-cyclohexane dicarboxylic acid; and aliphatic dicarboxylic acids such as malonic acid, succinic acid, glutaric acid, adipic acid and sebacic acid.

In addition, for the purpose of imparting the PBT resin with a degree of branching, a polyfunctional carboxylic acid compound other than dicarboxylic acid can be added. Examples thereof include trifunctional carboxylic acid compounds such as trimesic acid and trimellitic acid; and tetrafunctional carboxylic acid compounds such as pyromellitic acid. These polyfunctional carboxylic acid compound are used in a much smaller amount as compared to terephthalic acid.

Examples of the diol component other than 1,4-butanediol include aliphatic diols such as ethylene glycol, diethylene glycol, polyethylene glycol, propylene glycol, 1,3-propanediol, polytetramethylene ether glycol, 1,5-pentanediol, 2,3-pentanediol, neopentyl glycol, hexamethylene glycol, 1,6-hexanediol and 1,8-octanediol; alicyclic diols such as 1,2-cyclohexanediol, 1,4-cyclohexanediol, 1,1-cyclohexanedimethylol and 1,4-cyclohexanedimethylol; and aromatic diols such as xylylene glycol.

The amount of terephthalic acid used as a main material is preferably not less than 80% by mol, more preferably not less than 90% by mol, with respect to the total amount of the dicarboxylic acid component(s). The amount of 1,4-butanediol used as a main material is preferably not less than 85% by mol, more preferably not less than 90% by mol, with respect to the total amount of the diol component(s).

Examples of a method of producing the PBT resin include a method of allowing dimethyl terephthalate and/or the like to undergo a transesterification reaction with 1,4-butanediol; and a method of using direct esterification reaction between terephthalic acid and 1,4-butanediol. By the direct esterification reaction using terephthalic acid and 1,4-butanediol as starting materials, as compared to a method using a transesterification reaction, a PBT resin having a high cooling crystallization temperature can be more easily obtained. Further, by performing continuous polymerization, a high quality resin can be obtained without a molecular weight reduction over time during drawing from the reaction vessel after the completion of the reaction, an increase in the amount of terminal carboxyl groups or an increase in the amount of residual tetrahydrofuran.

In the polyester resin composition, in order to inhibit hydrolysis, the PBT resin has a terminal carboxyl group concentration of preferably 30 mmol/kg or less, more preferably 20 mmol/kg or less. The terminal carboxyl group concentration can be determined by dissolving the PBT resin in an organic solvent and subsequent titration with an alkaline solution.

The polymerization method used for the production of the PBT resin is not restricted; however, it is preferred that polymerization be performed continuously using a serial continuous vessel-type reactor. For example, a dicarboxylic acid component and a diol component are allowed to undergo an esterification reaction with stirring for 2 to 5 hours in the presence of an esterification catalyst at a temperature of preferably 150 to 280°C, more preferably 180 to 265°C and a pressure of preferably 6.8 to 133 kPa, more preferably 9 to 100 kPa, and the resulting esterification reaction product, which is an oligomer, is then transferred to one or a plurality of polycondensation reaction vessels where the oligomer is allowed to undergo a polycondensation reaction with stirring for 2 to 5 hours in the presence of a polycondensation catalyst at a temperature of 210 to 280°C under a reduced pressure of preferably 30 kPa or less, more preferably 20 kPa or less. A PBT resin obtained by the polycondensation reaction is transferred from the bottom of the polycondensation reaction vessel(s) to a polymer-drawing die and drawn into a strand form. Then, while being water-cooled or after being water-cooled, the resultant is cut using a pelletizer to obtain a granular resin in the form of a pellet or the like.

Examples of the esterification catalyst include titanium compounds, tin compounds, magnesium compounds and calcium compounds. Thereamong, a titanium compound can be particularly preferably used. Examples of the titanium compound used as the esterification catalyst include titanium alcoholates such as tetramethyl titanate, tetraisopropyl titanate and tetrabutyl titanate; and titanium phenolates such as tetraphenyl titanate. In cases where the titanium compound catalyst is tetrabutyl titanate, it is used in an amount of preferably 30 to 300 ppm (mass ratio), more preferably 50 to 200 ppm (mass ratio), in terms of titanium atom with respect to the theoretical yield of the PBT resin.

As the polycondensation catalyst used in the present invention, the esterification catalyst added at the time of performing the esterification reaction can be continuously used as the polycondensation catalyst without an addition of other catalyst, or a catalyst that is the same as or different from the esterification catalyst added at the time of performing the esterification reaction can be further added at the time of performing the polycondensation reaction. For example, in cases where tetrabutyl titanate is further added, it is used in an amount of preferably 300 ppm or less (mass ratio), more preferably 150 ppm or less (mass ratio), in terms of titanium atom with respect to the theoretical yield of the PBT resin. Examples of a polycondensation catalyst different from the esterification catalyst include antimony compounds such as diantimony trioxide; and germanium compounds such as germanium dioxide and germanium tetraoxide.

The polyester resin composition is not restricted to being one that consists of only a PBT resin and, in accordance with the intended purpose, the polyester resin composition may also contain other thermoplastic resin in such an amount that does not adversely affect the effects of the present invention. Examples of other thermoplastic resin include aromatic polyesters, for example, polyalkylene terephthalates such as polyethylene terephthalate and polycyclohexane dimethylene terephthalate, and polyalkylene naphthalates such as polyethylene naphthalate and polybutylene naphthalate; polyether ester resins obtained by copolymerizing a polyester constituent with other acid component and/or glycol component (for example, an acid component such as isophthalic acid, adipic acid, sebacic acid, glutaric acid, diphenylmethane dicarboxylic acid or dimer acid and/or a glycol component such as hexamethylene glycol, bisphenol A or neopentyl glycol alkylene oxide adduct); degradable aliphatic polyesters such as polyhydroxybutyrate, polycaprolactone, polybutylene succinate, polyethylene succinate, polylactic acid resin, polymalic acid, polyglycolic acid, polydioxanone and poly(2-oxetanone); polyester resins in a broad sense such as aromatic polyester/polyether block copolymers, aromatic polyester/polylactone block copolymers and polyallylate; polyphenylene sulfide; polyamide; polyimide; polyamide imide; polyether sulfone; polyether ether ketone; polycarbonate; polyurethane; fluorocarbon resins; homo- or co-polymers of α-olefin(s) such as ethylene and propylene; olefin-based resins such as cycloolefins, propylene-(meth)acrylic acid copolymers, ethylene-ethyl (meth)acrylate copolymers and ethylene-glycidyl (meth)acrylate copolymers; vinyl-based resins that are homo- or co-polymers of vinyl monomer(s), chlorine-containing vinyl monomer(s) and vinyl ketone(s) or copolymers with other copolymerizable monomer(s), such as polyvinyl chloride and ethylene-vinyl acetate copolymers; and thermoplastic elastomers.

When the polyester resin composition contains other thermoplastic resin, the ratio thereof is less than 50 parts by mass, preferably 20 parts by mass or less, more preferably 10 parts by mass or less, taking the total amount of the resin components as 100 parts by mass. Particularly, when the polyester resin composition contains a polyester resin other than the PBT resin, the ratio of the polyester resin other than the PBT resin is preferably 10 parts by mass or less, more preferably 5 parts by mass or less, taking the total amount of the resin components as 100 parts by mass.

The amount of the sulfonamide compound metal salt to be added with respect to 100 parts by mass of a polyester resin comprising not less than 50% by mass of the PBT resin is 0.001 to 1.0 part by mass, preferably 0.005 to 0.5 parts by mass. When the amount is less than 0.001 parts by mass, the actions and effects as a nucleating agent, the fogging-inhibiting effect and electrical insulating properties may not be obtained, whereas when the amount is greater than 1.0 part by mass, the effect of the addition is not likely to be obtained and such an amount is uneconomical.

In the polyester resin composition, components other than the above-described compounds may also be incorporated in such a range that does not impair the effects of the present invention. Examples of such other components include those additives that are usually used in aromatic polyester resins.

Examples of such additives include a phenolic antioxidant, a phosphorus-based antioxidant, a thioether-based antioxidant, an ultraviolet absorber, a hindered amine compound, a flame retardant, a nucleating agent, a filler, a lubricant, an antistatic agent, a silicate-based inorganic additive, a modifier, a heavy metal inactivator, a metallic soap, a fluorescent agent, an antimold agent, an antimicrobial agent, a mold release agent, a processing aid, a foaming agent, a pigment and a dye.

Examples of the phenolic antioxidant include 2,6-di-*tert*-butyl-4-ethylphenol, 2-*tert*-butyl-4,6-dimethylphenol, styrenated phenol, 2,2'-methylene-bis(4-ethyl-6-*tert*-butylphenol), 2,2'-thiobis-(6-*tert*-butyl-4-methylphenol), 2,2'-thiodiethylene-bis[3-(3,5-di-*tert*-butyl-4-hydroxyphenyl)propionate], 2-methyl-4,6-bis(octylsulfanylmethyl)phenol, 2,2'-isobutylidene-bis(4,6-dimethylphenol), isooctyl-3-(3,5-di-*tert*-butyl-4-hydroxyphenyl)propionate, *N*,*N*'-hexane-1,6-diylbis[3-(3,5-di-*tert*-butyl-4-hydroxyphenyl)propionamide, 2,2'-oxamide-bis[ethyl-3-(3,5-di-*tert*-butyl-4-hydroxyphenyl)propionate], 2-ethylhexyl-3-(3',5'-di-*tert*-butyl-4'-hydroxyphenyl)propionate, 2,2'-ethylene-bis(4,6-di-*tert*-butylphenol), 3,5-bis(1,1-dimethylethyl)-4-hydroxy-benzenepropanoate, C13-15 alkyl esters, 2,5-di-*tert*-amylhydroquinone, hindered phenol polymer (AO.OH998 (trade name), manufactured by ADEKA Palmarole), 2,2'-methylene-bis[6-(1-methylcyclohexyl)-*p*-cresol], 2-*tert*-butyl-6-(3-*tert*-butyl-2-hydroxy-5-methylbenzyl)-4-methylphenylacrylate, 2-[1-(2-hydroxy-3,5-di-*tert*-pentylphenyl)ethyl]-4,6-di-*tert*-pentylphenyl acrylate, 6-[3-(3-*tert*-butyl-4-hydroxy-5-methyl)propoxy]-2,4,8,10-tetra-*tert*-butylbenzo[d,f][1,3,2]-dio xaphosphepin, hexamethylene-bis[3-(3,5-di-*tert*-butyl-4-hydroxyphenyl)propionate, calcium bis[monoethyl(3,5-di-*tert*-butyl-4-hydroxybenzyl)phosphonate, a reaction product between 5,7-bis(1,1-dimethylethyl)-3-hydroxy-2(3*H*)-benzofuranone and *o*-xylene, 2,6-di-*tert*-butyl-4-(4,6-bis(octylthio)-1,3,5-triazine-2-ylamino)phenol, DL-a-tocophenol (vitamin E), 2,6-bis(α-methylbenzyl)-4-methylphenol, bis[3,3-bis-(4'-hydroxy-3'-*tert*-butyl-phenyl)butyric acid]glycol ester, 2,6-di-*tert*-butyl-*p*-cresol, 2,6-diphenyl-4-octadecyloxyphenol, stearyl(3,5-di-*tert*-butyl-4-hydroxyphenyl)propionate, distearyl(3,5 -di-*tert*-butyl-4-hydroxybenzyl)phosphonate, tridecyl-3,5-di-*tert*-butyl-4-hydroxybenzyl thioacetate, thiodiethylene-bis[(3,5-di-*tert*-butyl-4-hydroxyphenyl)propionate], 4,4'-thiobis(6-*tert*-butyl-*m*-cresol), 2-octylthio-4,6-di(3,5-di-*tert*-butyl-4-hydroxyphenoxy)-*s*-triazine, 2,2'-methylene-bis(4-methyl-6-*tert*-butylphenol), bis[3,3-bis(4-hydroxy-3-*tert*-butylphenyl)butyric acid]glycol ester, 4,4'-butylidene-bis(2,6-di-*tert*-butylphenol), 4,4'-butylidene-bis(6-*tert*-butyl-3-methylphenol), 2,2'-ethylidene-bis(4,6-di-*tert*-butylphenol), 1,1,3-tris(2-methyl-4-hydroxy-5-*tert*-butylphenyl)butane, bis[2-*tert*-butyl-4-methyl-6-(2-hydroxy-3-*tert*-butyl-5-methylbenzyl)phenyl]terephthalate, 1,3,5-tris(2,6-dimethyl-3-hydroxy-4-*tert*-butylbenzyl)isocyanurate, 1,3,5-tris(3,5-di-*tert*-butyl-4-hydroxybenzyl)isocyanurate, 1,3,5-tris(3,5-di-*tert*-butyl-4-hydroxybenzyl)-2,4,6-trimethylbenzene, 1,3,5-tris[(3,5-di-*tert*-butyl-4-hydroxyphenyl)propionyloxyethyl]isocyanurate, tetrakis[methylene-3-(3',5'-di-*tert*-butyl-4'-hydroxyphenyl)propionate]methane, 2-*tert*-butyl-4-methyl-6-(2-acryloyloxy-3-*tert*-butyl-5-methylbenzyl)phenol, 3,9-bis[2-(3-*tert*-butyl-4-hydroxy-5-methylhydrocinnamoyloxy)-1,1-dimethylethyl]-2,4,8,10-t etraoxaspiro[5.5]undecane, and triethylene glycol-bis[β-(3-*tert*-butyl-4-hydroxy-5-methylphenyl)propionate].

Examples of the phosphorus-based antioxidant include triphenyl phosphite, diisooctyl phosphite, heptakis triphosphite, triisodecyl phosphite, diphenyl isooctyl phosphite, diisooctylphenyl phosphite, diphenyl tridecyl phosphite, triisooctyl phosphite, trilauryl phosphite, diphenyl phosphite, tris(dipropylene glycol)phosphite, diisodecyl pentaerythritol diphosphite, dioleyl hydrogen phosphite, trilauryl trithiophosphite, bis(tridecyl)phosphite, tris(isodecyl)phosphite, tris(tridecyl)phosphite, diphenyldecyl phosphite, dinonylphenyl-bis(nonylphenyl)phosphite, poly(dipropylene glycol)phenyl phosphite, tetraphenyldipropyl glycol diphosphite, trisnonylphenyl phosphite, tris(2,4-di-*tert*-butylphenyl)phosphite, tris(2,4-di-*tert*-butyl-5-methylphenyl)phosphite, tris[2-*tert*-butyl-4-(3-*tert*-butyl-4-hydroxy-5-methylphenylthio)-5-methylphenyl]phosphite, tridecyl phosphite, octyldiphenyl phosphite, di(decyl)monophenyl phosphite, distearyl pentaerythritol diphosphite, a mixture of distearyl pentaerythritol and calcium stearate, alkyl(C 10) bisphenol-A phosphite, di(tridecyl)pentaerythritol diphosphite, di(nonylphenyl)pentaerythritol diphosphite, bis(2,4-di-*tert*-butylphenyl)pentaerythritol diphosphite, bis(2,6-di-*tert*-butyl-4-methylphenyl)pentaerythritol diphosphite, bis(2,4,6-tri-*tert*-butylphenyl)pentaerythritol diphosphite, bis(2,4-dicumylphenyl)pentaerythritol diphosphite, tetraphenyl-tetra(tridecyl)pentaerythritol tetraphosphite, bis(2,4-di-*tert*-butyl-6-methylphenyl)ethyl phosphite, tetra(tridecyl)isopropylidene diphenol diphosphite, tetra(tridecyl)-4,4'-*n*-butylidene-bis(2-*tert*-butyl-5-methylphenol)diphosphite, hexa(tridecyl)-1,1,3-tris(2-methyl-4-hydroxy-5-*tert*-butylphenyl)butane triphosphite, tetrakis(2,4-di-*tert*-butylphenyl)biphenylene diphosphonite, 9,10-dihydro-9-oxa-10-phosphaphenanthrene-10-oxide, (1-methyl-1-propanyl-3-ylidene)-tris(2-1,1-dimethylethyl)-5-methyl-4,1-phenylene)hexatride cyl phosphite, 2,2'-methylene-bis(4,6-*tert*-butylphenyl)-2-ethylhexyl phosphite, 2,2'-methylene-bis(4,6-di-*tert*-butylphenyl)-octadecyl phosphite, 2,2'-ethylidene-bis(4,6-di-*tert*-butylphenyl)fluorophosphite, 4,4'-butylidene-bis(3-methyl-6-*tert*-butylphenylditridecyl)phosphite, tris(2-[(2,4,8,10-tetrakis-*tert*-butyldibenzo[d,f][1,3,2]dioxaphosphepin-6-yl)oxy]ethyl)amine, 3,9-bis(4-nonylphenoxy)-2,4,8,10-tetraoxa-3,9-diphosphaspiro[5,5]undecane, 2,4,6-tri-*tert*-butylphenyl-2-butyl-2-ethyl-1,3-propanediol phosphite, poly-4,4'-isopropylidene diphenol C12-15 alcohol phosphite, and phosphite of 2-ethyl-2-butylpropylene glycol and 2,4,6-tri-*tert*-butylphenol.

Examples of the thioether-based antioxidant include tetrakis [methylene-3 -(laurylthio)propionate]methane, bis(methyl-4-[3-*n*-alkyl(C12/C14)thiopropionyloxy]-5-*tert*-butylphenyl)sulfide, ditridecyl-3,3'-thiodipropionate, dilauryl-3,3'-thiodipropionate, dimyristyl-3,3 '-thiodipropionate, distearyl-3,3 '-thiodipropionate, lauryl/stearyl thiodipropionate, 4,4'-thiobis(6-*tert*-butyl-*m*-cresol), 2,2'-thiobis(6-*tert*-butyl-*p*-cresol) and distearyl disulfide.

Examples of the ultraviolet absorber include benzotriazole compounds, triazine compounds, benzoate compounds, benzophenone compounds, cyanoacrylate compounds, salicylate compounds, oxanilide compounds and other ultraviolet absorbers, among which those having good compatibility with PBT resin are preferred.

Examples of the benzotriazole compounds include 2-(2-hydroxy-5-*tert*-octylphenyl)benzotriazole, 2-(2-hydroxy-3,5-di-*tert*-butylphenyl)-5-chlorobenzotriazole, 2-(2'-hydroxy-3'-*tert*-butyl-5'-methylphenyl)-5-chlorobenzotriazole, 2-(2-hydroxy-3-dodecyl-5-methylphenyl)benzotriazole, 2-(2-hydroxy-3-di-*tert*-butyl-C7 to 9 mixed alkoxy-carbonylethylphenyl)benzotriazole, 2-(2'-hydroxy-3',5'-dicumylphenyl)benzotriazole, 2,2'-methylene-bis(6-(2*H*-benzotriazole-2-yl)-4-(1,1,3,3-tetramethylbutyl)phenol), 2-(2'-hydroxy-5'-*tert*-butylphenyl)benzotriazole, 2-(2'-hydroxy-3',5'-di-*tert*-butylphenyl)benzotriazole, 2-(2-hydroxy-3-*sec*-butyl-5-*tert*-butylphenyl)benzotriazole, 2-(2'-hydroxy-5'-methylphenyl)benzotriazole, 2-(2'-hydroxy-3',5'-di-*tert*-butylphenyl)benzotriazole, 3-(2H-benzotriazolyl)-5-*tert*-butyl-4-hydroxy-benzenepropanoic acid octyl ester, 2-[2-hydroxy-3-(3,4,5,6-tetrahydrophthalimide-methyl)-5-methylphenyl]benzotriazole, and polyethylene glycol ester of 2-(2-hydroxy-3-*tert*-butyl-5-carboxyphenyl)benzotriazole.

Examples of the triazine compounds include 2-[4,6-bis(2,4-dimethylphenyl)-1,3,5-triazine-2-yl]-5-(octyloxy)-phenol, 2,4-bis(2,4-dimethylphenyl)-6-(2-hydroxy-4-isooctylphenyl)-1,3,5-triazine, 2-(4,6-diphenyl-1,3,5-triazine-2-yl)-5-[2-(2-ethylhexanoyloxy)ethoxy]phenol, polymers of 1,6-hexadiamine with *N*,*N*'-bis(2,2,6,6-tetramethyl-4-piperidinyl) and 2,4-dichloro-6-(4-morpholinyl)-1,3,5-triazine, 2-(4,6-bis-(2,4-dimethylphenyl)-1,3,5-triazine-2-yl)-5-octyloxy)-phenol, 2-(4,6-diphenyl-1,3,5-triazine-2-yl)-5-[(hexyl)oxy]-phenol, 2-[4-[(2-hydroxy-3-(2'-ethyl)hexyl)oxy]-2-hydroxyphenyl]-4,6-bis(2,4-dimethylphenyl)-1,3,5 -triazine, and polycondensates of 2-[4-[2-hydroxy-3-dodecyloxypropyl]oxy]-2-hydroxyphenyl]-4,6-bis(2,4-dimethylphenyl)-1, 3,5-triazine and 2-[4-[(2-hydroxy-3-tridecyloxypropyl)oxy]-2-hydroxyphenyl]-4,6-bis(2,4-dimethylphenyl)-1, 3,5-triazine.

Examples of the benzoate compounds include resorcinol monobenzoate, 2,4-di-*tert*-butylphenyl-3,5-di-*tert*-butyl-4-hydroxybenzoate, 2,4-di-*tert*-butylamylphenyl-3,5-di-*tert*-butyl-4-hydroxybenzoate and hexadecyl-3,5-di-*tert*-butyl-4-hydroxybenzoate.

Examples of the benzophenone compounds include 2,4-dihydroxybenzophenone, 2,2'-dihydroxy-4-methoxybenzophenone, 2,2'-dihydroxy-4,4'-dimethoxybenzophenone, 2-hydroxy-4-methoxybenzophenone, 2-hydroxy-4-*n*-octoxybenzophenone, 2-hydroxy-4-*n*-dodecyloxybenzophenone, 2,2',4,4'-tetrahydroxybenzophenone, 4-benzoyloxy-2-hydroxybenzophenone, methylene [bis(hydroxymethoxyphenylene)]bis(phenyl) ketone, 1,4-bis(4-bis(4-benzoyl-3-hydroxyphenoxy)-butane, poly-4-(2-acryloxyethoxy)- 2- hydroxybenzophenone, 2-hydroxy-4-methoxybenzophenone-5-sulfonic acid, 2-hydroxy-4-methoxybenzophenone-5-sulfonic acid trihydrate, disodium-2,2'-dihydroxy-4,4'-dimethoxy-5,5'-disulfonic acid benzophenone, 2-hydroxy-4-*tert*-butyl-4'-(2-methacryloyloxyethoxyethoxy)benzophenone and 5,5'-methylene-bis(2-hydroxy-4-methoxybenzophenone).

Examples of the cyanoacrylate compounds include 1,3-bis[(2'-cyano-3',3'-diphenylacryloyl)oxy]-2,2-bis-{[(2'-cyano-3',3'-diphenylacryloyl)oxy] methyl} -propane, ethyl-2-cyano-3,3-diphenylacrylate, methyl-2-cyano-3-methyl-3-(*p*-methoxyphenyl)acrylate and (2-ethylhexyl)- 2-cyano- 3,3 -diphenylacrylate.

Examples of the salicylate compounds include phenyl salicylate and 4-*tert*-butylphenyl salicylate.

Examples of the oxanilide compounds include 2-ethyl-2'-ethoxyoxanilide and 2-ethoxy -4' -dodecyloxanilide.

Examples of the above-described other ultraviolet absorbers include *N*-(4-ethoxycarbonylphenyl)-*N*'-methyl-*N*'-phenyl formamidine, *N*-(ethoxycarbonylphenyl)-*N*'-ethyl-*N*'-ethyl-*N*'-phenyl formamidine, tetraethyl-2,2'-(1,4-phenylene-dimethylidene)-bismalonate, [(4-methoxy-phenyl)-methylene]-dimethyl ester and 4,4'-hexamethylenebis(1,1-dimethylsemicarbazide).

Examples of the hindered amine compound include 2,2,6,6-tetramethyl-4-piperidyl stearate, 1,2,2,6,6-pentamethyl-4-piperidyl stearate, 2,2,6,6-tetramethyl-4-piperidylbenzoate, bis(2,2,6,6-tetramethyl-4-piperidyl)sebacate, tetrakis(2,2,6,6-tetramethyl-4-piperidyl)-1,2,3,4-butane tetracarboxylate, tetrakis(1 ,2,2,6,6-pentamethyl-4-piperidyl)-1 ,2,3,4-butane tetracarboxylate, bis(2,2,6,6-tetramethyl-4-piperidyl)·di(tridecyl)-1,2,3,4-butane tetracarboxylate, bis(1,2,2,6,6-pentamethyl-4-piperidyl)·di(tridecyl)-1,2,3,4-butane tetracarboxylate, bis(1,2,2,4,4-pentamethyl-4-piperidyl)-2-butyl-2-(3,5-di-*tert*-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-*s*-triazine polycondensate, 1,6-bis(2,2,6,6-tetramethyl-4-piperidylamino)hexane/2,4-dichloro-6-*tert*-octylamino-*s*-triazin e polycondensate, 1,5,8,12-tetrakis[2,4-bis(*N*-butyl-*N*-(2,2,6,6-tetramethyl-4-piperidyl)amino)-*s*-triazine-6-yl]-1, 5,8,12-tetraazadodecane, 1,5,8,12-tetrakis[2,4-bis(*N*-butyl-*N*-(1,2,2,6,6-pentamethyl-4-piperidyl)amino)-*s*-triazine-6-yl] -1,5,8-12-tetraazadodecane, 1,6,11-tris[2,4-bis(*N*-butyl-*N*-(2,2,6,6-tetramethyl-4-piperidyl)amino)-*s*-triazine-6-yl]aminoun decane, 1,6,11-tris[2,4-bis(*N*-butyl-*N*-(1,2,2,6,6-pentamethyl-4-piperidyl)amino)-*s*-triazine-6-yl]amino undecane, bis {4-(1-octyloxy-2,2,6,6-tetramethyl)piperidyl} decanedionate and bis{4-(2,2,6,6-tetramethyl-1-undecyloxy)piperidyl}carbonate.

Examples of the flame retardant include aromatic phosphates such as triphenyl phosphate, tricresyl phosphate, trixylenyl phosphate, cresyldiphenyl phosphate, cresyl-2,6-xylenyl phosphate, resorcinol-bis(diphenylphosphate), (1-methylethylidene)di-4,1-phenylenetetraphenyl diphosphate, 1,3-phenylene-tetrakis(2,6-dimethylphenyl)phosphate, ADK STAB FP-500 (manufactured by ADEKA Corporation), ADK STAB FP-600 (manufactured by ADEKA Corporation) and ADK STAB FP-800 (manufactured by ADEKA Corporation); phosphonates such as divinyl phenylphosphonate, diallyl phenylphosphonate and (1-butenyl)phenylphosphonate; phosphinates such as phenyl diphenylphosphinate, methyl diphenylphosphinate and 9,10-dihydro-9-oxa-10-phosphaphenanthlene-10-oxide derivatives; phosphazene compounds such as bis(2-allylphenoxy)phosphazene and dicresylphosphazene; phosphorus-based flame retardants such as melamine phosphate, melamine pyrophosphate, melamine polyphosphate, melam polyphosphate, ammonium polyphosphate, piperazine phosphate, piperazine pyrophosphate, piperazine polyphosphate, phosphorus-containing vinylbenzyl compounds and red phosphorus; metal hydroxides such as magnesium hydroxide and aluminum hydroxide; and bromine-based flame retardants such as brominated bisphenol A-type epoxy resins, brominated phenol novolac-type epoxy resins, hexabromobenzene, pentabromotoluene, ethylene-bis(pentabromophenyl), ethylene-bis-tetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, 2,4,6-tris(tribromophenoxy)-1,3,5-triazine, tribromophenyl maleimide, tribromophenyl acrylate, tribromophenyl methacrylate, tetrabromobisphenol A-type dimethacrylate, pentabromobenzyl acrylate and brominated styrene. These flame retardants are preferably used in combination with a drip inhibitor such as a fluorocarbon resin and/or a flame retardant aid such as a polyhydric alcohol or hydrotalcite.

Examples of the nucleating agent include metal carboxylates such as sodium benzoate, aluminum-4-*tert*-butylbenzoate, sodium adipate and 2-sodium-bicyclo[2.2.1]heptane-2,3-dicarboxylate; metal phosphates such as sodium-bis(4-*tert*-butylphenyl)phosphate, sodium-2,2'-methylene-bis(4,6-di-*tert*-butylphenyl)phosphate and lithium-2,2'-methylene-bis(4,6-di-*tert*-butylphenyl)phosphate; polyhydric alcohol derivatives such as dibenzylidene sorbitol, bis(methylbenzylidene)sorbitol, bis(*p*-ethylbenzylidene)sorbitol and bis(dimethylbenzylidene)sorbitol; and amide compounds such as *N*,*N*',*N*"-tris[2-methylcyclohexyl]-1,2,3-propane tricarboxamide (RIKACLEAR PCI), *N*,*N*',*N*"-tricyclohexyl-1,3,5-benzene tricarboxamide, *N*,*N*'-dicyclohexyl-naphthalene dicarboxamide and 1,3,5-tri(dimethylisopropoylamino)benzene.

Examples of the filler include those fillers that impart the resulting molded article with rigidity such as dynamic strength, allow the resulting molded article to be hardly anisotropic and have little warpage, and control the fluidity of the polyester resin composition during melt-processing. Examples of such fillers include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fibers, clays, dolomite, silica, alumina, potassium titanate whiskers, wollastonite and fibrous magnesium oxysulfate. Thereamong, fillers having an average particle size (in the case of a spherical or plate-form filler) or an average fiber diameter (in the case of a needle-form or fibrous filler) of 5 µm or less are preferred.

For the purpose of imparting a molded article with rigidity such as dynamic strength, a fibrous filler is preferably used and a glass fiber is particularly preferred. Further, in order to obtain a molded article showing limited anisotropy and warping, a plate-form filler is preferably used and, for example, mica or glass flake is particularly preferably used. Moreover, a particulate filler is also preferably used for adjusting the fluidity during the production of a molded article.

The above-described filler may also be treated in advance with a surface treatment agent in order to improve its affinity and adhesion at the interface with the polyester resin. The surface treatment agent is, for example, an aminosilane compound or a surface treatment agent containing at least one epoxy resin.

Examples of the aminosilane compound include γ-aminopropyl triethoxysilane, γ-aminopropyl trimethoxysilane and γ-(2-aminoethyl)aminopropyl trimethoxysilane.

Examples of the epoxy resin contained in the surface treatment agent include novolac-type epoxy resins and bisphenol-type epoxy resins, and a novolac-type epoxy resin is preferably used. Examples of the novolac-type epoxy resins include polyfunctional epoxy resins such as phenol novolac-type epoxy resins and cresol novolac-type epoxy resins.

Further, in the surface treatment agent, in addition to the above-described aminosilane compound and epoxy resin, a component(s) such as a urethane resin, an acrylic resin, an antistatic agent, a lubricant and/or a water repellent may also be incorporated in such an amount that does not adversely affect the properties of the surface treatment agent. Moreover, examples of other surface treatment agent include non-novolac-type and non-bisphenol-type epoxy resins, and coupling agents.

The above-described lubricant is added for the purposes of imparting the surface of the resulting molded article with lubricity and improving the damage-preventing effect. Examples of such lubricant include unsaturated fatty acid amides such as oleic acid amide and erucic acid amide; and saturated fatty acid amides such as behenic acid amide and stearic acid amide. These lubricants may be used individually, or two or more thereof may be used in combination.

The above-described antistatic agent is added for the purposes of reducing the electrostaticity of the resulting molded article and inhibiting dust adhesion caused by electrostatic charge. Examples of such antistatic agent include cationic, anionic and non-ionic antistatic agents. Preferred examples thereof include polyoxyethylene alkylamines, polyoxyethylene alkylamides, fatty acid esters thereof, and glycerin fatty acid esters.

Examples of the modifier (including plasticizers) include phthalate esters such as dimethyl phthalate, diethyl phthalate, dimethoxyethyl phthalate, dibutyl phthalate, butylhexyl phthalate, diheptyl phthalate, dioctyl phthalate, di-2-ethylhexyl phthalate, diisononyl phthalate, diisodecyl phthalate, dilauryl phthalate, dicyclohexyl phthalate and dioctyl terephthalate; phosphate esters such as triphenyl phosphate, biphenyl diphenyl phosphate, tricresyl phosphate, cresyldiphenyl phosphate, trixylenyl phosphate, tri(isopropylphenyl)phosphate, triethyl phosphate, tributyl phosphate, trioctyl phosphate, tri(butoxyethyl)phosphate and octyldiphenyl phosphate; glycolic acid esters such as triacetin, tributyrin, butylphthalylbutyl glycolate, methylphthalylethyl glycolate and ethylphthalylethyl glycolate; and pentaerythritol tetraacetate.

In addition to the above, examples of the plasticizer also include the followings: adipate-based plasticizers such as dioctyl adipate, diisononyl adipate, diisodecyl adipate and di(butyldiglycol)adipate; plasticizers produced using ethylene glycol, diethylene glycol, triethylene glycol, 1,2-propylene glycol, 1,3-propylene glycol, 1,3-butanediol, 1,4-butanediol, 1,5-hexanediol, 1,6-hexanediol, neopentyl glycol or the like as a polyhydric alcohol, oxalic acid, malonic acid, succinic acid, glutaric acid, adipic acid, pimelic acid, suberic acid, azelaic acid, sebacic acid, phthalic acid, isophthalic acid, terephthalic acid or the like as a dibasic acid and, as required, a monohydric alcohol or a monocarboxylic acid (such as acetic acid or aromatic acid) as a stopper; sebacic acid-based plasticizers; stearic acid-based plasticizers; citric acid-based plasticizers such as tributyl acetylcitrate; trimellitic acid-based plasticizers; pyromellitic acid-based plasticizers; biphenylene polycarboxylic acid-based plasticizers; and polyhydric alcohol aromatic acid ester-based plasticizers (such as trimethylolpropane tribenzoate).

Examples of the silicate-based inorganic additive include hydrotalcite, fumed silica, fine-particle silica, silica rock, diatomites, clay, kaolin, diatomaceous earth, silica gel, calcium silicate, sericite, kaolinite, flint, feldspar powder, vermiculite, attapulgite, talc, mica, minnesotite, pyrophyllite and silica.

As the mold release agent, one which improves the releasing property of the resulting molded article from a mold and allows the molded article to be released even from a mold with a cavity having a reverse-tapered surface is preferred, and examples of such a mold release agent include polyethylene-based waxes and low-molecular-weight polypropylenes. The term "polyethylene-based waxes" used herein refers to low-molecular-weight polyethylenes having a molecular weight of about 500 to 10,000.

The molded article formed from the polyester resin composition has excellent fogging resistance and electrical insulating properties; therefore, it is suitable for electrical/electronic components. In addition, the molded article can also be used in, for example, food containers, containers for cosmetics, daily miscellaneous goods, and clothes and toys.

The molded article formed from the polyester resin composition can be easily molded by an ordinary method using a conventional equipment. Examples of the method include a method in which a polyester resin, a sulfonamide compound metal salt and various additive components are mixed and the resulting mixture is then kneaded and extruded using a uniaxial or biaxial extruder to prepare a pellet, which is subsequently molded; and a method in which, after preparing pellets of different additive components in advance, these pellets are mixed with a pellet prepared from a polyester resin and a sulfonamide compound metal salt and the resulting mixture is subsequently injection-molded.

The molded article formed from the polyester resin composition can be molded with a desired formulation by any of these methods. Alternatively, the molded article formed from the polyester resin may be obtained by mixing a polyester resin, which is partially in the form of fine powder, with a pellet prepared from a sulfonamide compound metal salt and then molding the resulting mixture.

The polyester resin composition obtained by mixing a polyester resin and a sulfonamide compound metal salt is preferably dried in advance at a temperature of 100 to 150°C until the water content in the resin composition is reduced to 0.02% or less. When the water content in the resin composition is higher than 0.02%, during processing of the polyester resin composition, a gas may be generated due to hydrolysis of the polyester resin and this may cause problems such as burning of the resin and die contamination.

In cases where the polyester resin composition is melt-kneaded using an extruder, it is preferred that the resin temperature be controlled within a range of from the melting point of the polyester resin to 300°C. When the resin temperature is lower than the melting point, the polyester resin composition may not be melt-kneaded, while when the resin temperature is higher than 300°C, thermal degradation of the polyester resin occurs prominently, so that the resulting molded article may not have desired physical properties. In cases where the polyester resin composition is injection-molded, it is preferred that the resin temperature be controlled within a range of 240 to 280°C.
Next, the insulating material will be described in detail.
The insulating material comprises the molded article formed from the polyester resin composition. As described above, the molded article formed from the polyester resin composition can be used in, for example, food containers, containers for cosmetics and clothes, daily miscellaneous articles and toys and, since the molded article formed from the polyester resin composition has excellent fogging resistance and electrical insulating properties, it is particularly suitable as an insulating material in which electrical insulating properties are required. The molded article formed from the polyester resin composition can thus be suitably used in electrical/electronic components.

Examples of electrical/electronic components in which the effects of the present invention are prominently exerted include electrical and electronic articles such as lighting parts, distributors, harness connectors, ignition coils, current-carrying parts of air bags; coating materials of electric wires and cables; electronic and electrical parts such as transformers, coil bobbins, coil casings, plugs and terminal blocks; precision parts for office automation equipments, such as keyboards of office automation equipments and telephones; chassis of electrical and electronic devices; and protective films of capacitor dielectrics.

### EXAMPLES

The present invention will now be described more concretely by way of examples thereof; however, the present invention is not restricted to the following examples and the like by any means.

### <Examples 1 to 5 and Comparative Examples 1 to 4>

The additive shown in Table 1 below was added and mixed with 100 parts by mass of a polybutylene terephthalate resin (manufactured by WinTech Polymer Ltd., trade name: DURANEX 2002), and the resulting mixture was dried for 3 hours at 130°C. After confirming that the water content in this resin composition was less than 0.02%, the resin composition was melt-kneaded using a biaxial extruder (TEX30α, manufactured by The Japan Steel Works, Ltd.) at a cylinder temperature of 260°C and a screw speed of 200 rpm to obtain a pellet. In this melt-kneading process, the resin temperature was 265°C. The thus obtained pellet was dried for 3 hours in a 130°C vacuum oven and then subjected to the below-described evaluations.

### [Fogging Resistance]

For the pellet obtained above, a glass plate was subjected to a fogging test in accordance with ISO 6452 under a condition of 24-hour heating at 150°C and the cloudiness of the glass plate was visually observed. When the glass plate was observed with no cloudiness, the fogging resistance was evaluated as "○" (present), while when the glass plate was observed with cloudiness, the fogging resistance was evaluated as "×" (absent). The evaluation results are shown in Table 1 below.

### [Load-Deflection Temperature (HDT)]

Immediately after drying the pellet obtained above, the pellet was injection-molded using an injection molding machine (EC100, manufactured by Toshiba Corporation) at a die temperature of 50°C and an injection temperature of 260°C to prepare a test piece of 80 mm × 10 mm × 4 mm in size, and the load-deflection temperature (HDT) of the test piece was measured in accordance with ISO 75 (load: 0.45 MPa). The results thereof are shown in Table 1 below.

### [Crystallization temperature, Tc [°C]]

In accordance with JIS K7121-1987, using a differential scanning calorimeter (DIAMOND, manufactured by PerkinElmer Co., Ltd.), the pellet obtained above was heated under nitrogen atmosphere from 30°C to 280°C at a rate of 10°C/min. After maintaining the pellet at this temperature for 5 minutes, the pellet was cooled to 0°C at a rate of -10°C/min to obtain a DSC curve, from which the crystallization temperature, Tc [°C], was determined. The results thereof are shown in Table 1 below.

### [Flexural Modulus [MPa]]

Immediately after drying the pellet obtained above, the pellet was injection-molded using an injection molding machine (EC100, manufactured by Toshiba Corporation) at a die temperature of 50°C and an injection temperature of 260°C to prepare a test piece of 80 mm × 10 mm × 4 mm in size, and the flexural modulus [MPa] of the test piece was measured in accordance with ISO 178. The results thereof are shown in Table 1 below.

**[Table 1]**

| | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|
| Formulation (parts by mass) | PBT resin | 100 | 100 | 100 | 100 | 100 | 100 | 100 | 100 | 100 |
| | Compound No. 1^{*1} | 0.1 | 0.2 | 0.3 | 0.5 | 1.0 | - | - | - | - |
| | NA-11^{*2} | - | - | - | - | - | - | 0.3 | - | - |
| | Sodium montanate | - | - | - | - | - | - | - | 0.3 | - |
| | Talc ^{*3} | - | - | - | - | - | - | - | - | 0.3 |
| Evaluation results | Fogging resistance | ○ | ○ | ○ | ○ | ○ | ○ | × | × | × |
| | Load -deflection temperature [°C] | 56 | 58 | 62 | 62 | 63 | 53 | 54 | 55 | 56 |
| | Crystallization temperature [°C] | 203.6 | 204.1 | 204.5 | 204.3 | 205.1 | 202.4 | 203.5 | 203.3 | 203.6 |
| | Flexural modulus [MPa] | 2,490 | 2,510 | 2,540 | 2,600 | 2,620 | 2,410 | 2,450 | 2,480 | 2,510 |

| | | | | | | | | | | |
|---|---|---|---|---|---|---|---|---|---|---|
| ^{*1} (Compound No. 1): sodium salt of 1,2-benzisothiazol-3(2*H*)-one-1,1-dioxide ^{*2} (NA-11): manufactured by ADEKA Corporation, trade name: ADK STAB NA-11 ^{*3} (Talc): manufactured by Hayashi-Kasei Co., Ltd., MICRON WHITE #5000S | | | | | | | | | | |

### <Example 6 and Comparative Examples 5 to 9>

The additive(s) shown in Table 2 below was/were added and mixed with 100 parts by mass of a polybutylene terephthalate resin (manufactured by WinTech Polymer Ltd., trade name: DURANEX 2002) or 100 parts by mass of a polyethylene terephthalate resin (manufactured by Unitika Ltd., trade name: MA-2103), and the resulting mixture was dried for 3 hours at 130°C. After confirming that the water content in this resin composition was less than 0.02%, the resin composition was melt-kneaded using a biaxial extruder (TEX30α, manufactured by The Japan Steel Works, Ltd.) at a cylinder temperature of 260°C and a screw speed of 200 rpm to obtain a pellet. In this melt-kneading process, the resin temperature was 265°C. The thus obtained pellet was dried for 3 hours in a 130°C vacuum oven and then subjected to the below-described evaluations.

### [Dielectric Strength Test]

Immediately after drying the pellet obtained above, the pellet was injection-molded using an injection molding machine (NEX80; manufactured by Nissei Plastic Industrial Co., Ltd.) at a die temperature of 50°C and an injection temperature of 260°C to prepare a test piece of 100 mm in length × 100 mm in width × 2 mm in thickness. Then, using a dielectric breakdown tester, YST-243-100RHO manufactured by Yamayo Shikenki LLC., the dielectric breakdown voltage and the dielectric breakdown strength of the test piece was determined in accordance with IEC 60243-1 standard (alternating current, 50 Hz) under the following test conditions. The results thereof are shown in Table 2 below.

Pressure-increasing method: short-time method
Surrounding medium: silicone oil (23°C)
Pressure increase rate: 3 kV/s
Test electrodes: ϕ25 cylinder/ϕ25 cylinder
Test environment: room temperature = 23°C, humidity = 50 ± 5%RH

### [Arc Resistance Test]

Immediately after drying the pellet obtained above, the pellet was molded using an injection molding machine (NEX80; manufactured by Nissei Plastic Industrial Co., Ltd.) at a die temperature of 50°C and an injection temperature of 260°C and a test piece of 20 mm in length × 20 mm in width × 2 mm in thickness was cut out. Then, in accordance with ASTM D 495 standard, the arc resistance (s) was evaluated using an arc resistance tester, HAT-100 manufactured by Hitachi Chemical Co., Ltd. The results thereof are shown in Table 2 below.

**[Table 2]**

| | | Example 6 | Comparative Example 5 | Comparative Example 6 | Comparative Example 7 | Comparative Example 8 | Comparative Example 9 |
|---|---|---|---|---|---|---|---|
| Formulation (parts by mass) | PBT resin | 100 | 100 | 100 | - | - | - |
| | PET resin | - | - | - | 100 | 100 | 100 |
| | Compound No. 1^{*1} | 0.3 | - | - | - | 0.3 | - |
| | Sodium montanate | - | - | 0.3 | - | - | 0.3 |
| Evaluation results | Dielectric breakdown voltage (kV) | 48.0 | 44.0 | 47.5 | 44.0 | 45.0 | 44.8 |
| | Dielectric breakdown strength (kV/mm) | 23.8 | 22.9 | 23.6 | 21.9 | 22.5 | 22.7 |
| | Arc resistance (s) | 180 | 181 | 174 | 125 | 97 | 110 |

From the results of Comparative Examples 2 to 4 shown in Table 1, when a conventionally known nucleating agent was incorporated, although the physical properties were improved as compared to a case where no nucleating agent was incorporated as in Comparative Example 1, the effect thereof was still insufficient. Further, it was confirmed that there was a problem in the fogging resistance.

On the other hand, from the results of Examples 1 to 5 shown in Table 1, it was confirmed that the rigidity and the heat resistance of the molded articles formed from the polyester resin composition were largely improved and that, in particular, the molded articles had excellent fogging resistance.

Further, from the results of Comparative Examples 7 to 9 shown in Table 2, in those cases where the PET resin was molded, it was confirmed that the resulting molded articles containing a nucleating agent had a markedly reduced arc resistance. In addition, from the comparisons among Example 6, Comparative Examples 5 and 6, it was confirmed that the use of a nucleating agent different from a sulfonamide compound metal salt resulted in a reduction in the arc resistance of the PBT resin. Moreover, from the results of Example 6 and Comparative Examples 5 and 6 shown in Table 2, it was confirmed that, by the method of improving the electrical insulating properties of a polyester resin composition, the electrical insulating properties can be greatly improved while hardly affecting the arc resistance.

From the above, it was confirmed that the molded article formed from the polyester resin composition has excellent fogging resistance and electrical insulating properties and is thus useful for insulating material applications. Further, it was also confirmed that the method of improving the electrical insulating properties of a polyester resin composition is capable of imparting a molded article of PBT resin with excellent electrical insulating properties.

## Claims

1. Use of a sulfonamide compound metal salt for improving the electrical insulating properties and fogging resistance of a polyester resin composition, such that the polyester resin composition comprises 0.001 to 1.0 part by mass of said sulfonamide compound metal salt with respect to 100 parts by mass of a polyester resin, wherein the polyester resin comprises not less than 50% by mass of a polybutylene terephthalate.

2. Use according to claim 1, wherein said sulfonamide compound metal salt is selected from the following; a metal salt of benzenesulfonamide, a metal salt of toluene-4-sulfonamide, a metal salt of *N*-phenyl-benzenesulfonamide, a metal salt of *N*-phenyl-4-methyl-benzenesulfonamide or a metal salt of 1,2-benzisothiazol-3(2*H*)-one-1,1-dioxide.

3. Use according to claim 1 or 2, wherein said sulfonamide compound metal salt is a sodium salt of 1,2-benzisothiazol-3(2*H*)-one-1,1-dioxide.

4. Use according to any preceding claim, such that said polyester resin composition comprises 0.005 to 0.5 part by mass of the sulfonamide compound metal salt with respect to 100 parts by mass of a polyester resin.

5. Use according to any preceding claim, wherein the polyester resin composition is formed into a molded article.

6. Use according to claim 5, wherein the molded article is an insulating material.

7. Use according to claim 6, wherein the insulating material is used in an electrical/electronic component.

## Patentansprüche

1. Verwendung eines Metallsalzes von einer Sulfonamidverbindung zur Verbesserung der elektrischen Isoliereigenschaften und Fogging-Resistenz einer Polyesterharzzusammensetzung derart, dass die Polyesterharzzusammensetzung 0,001 bis 1,0 Masseteil des Metallsalzes von der Sulfonamidverbindung bezogen auf 100 Masseteile eines Polyesterharzes umfasst, wobei das Polyesterharz nicht weniger als 50 Masse-% eines Polybutylenterephthalats umfasst.

2. Verwendung nach Anspruch 1, wobei das Metallsalz von der Sulfonamidverbindung aus dem Folgenden ausgewählt ist: einem Metallsalz von Benzensulfonamid, einem Metallsalz von Toluen-4-sulfonamid, einem Metallsalz von *N*-Phenyl-benzensulfonamid, einem Metallsalz von *N*-Phenyl-4-methyl-benzensulfonamid oder einem Metallsalz von 1,2-Benzisothiazol-3(2*H*)-on-1,1-dioxid.

3. Verwendung nach Anspruch 1 oder 2, wobei das Metallsalz von der Sulfonamidverbindung ein Natriumsalz von 1,2-Benzisothiazol-3(2*H*)-on-1,1-dioxid ist.

4. Verwendung nach einem vorangehenden Anspruch derart, dass die Polyesterharzzusammensetzung 0,005 bis 0,5 Masseteile des Metallsalzes von der Sulfonamidverbindung bezogen auf 100 Masseteile eines Polyesterharzes umfasst.

5. Verwendung nach einem vorangehenden Anspruch, wobei die Polyesterharzzusammensetzung in ein Formteil geformt wird.

6. Verwendung nach Anspruch 5, wobei das Formteil ein Isoliermaterial ist.

7. Verwendung nach Anspruch 6, wobei das Isoliermaterial in einer elektrischen/elektronischen Komponente verwendet wird.

## Revendications

1. Utilisation d'un sel de métal de composé sulfonamide pour améliorer les propriétés d'isolation électrique et la résistance à la nébulisation d'une composition de résine polyester, de sorte que la composition de résine polyester comprend entre 0,001 et 1,0 partie en masse dudit sel de métal de composé sulfonamide par rapport à 100 parties en masse d'une résine polyester, dans laquelle la résine polyester comprend au moins 50% en masse d'un téréphtalate de polybutylène.

2. Utilisation selon la revendication 1, dans laquelle ledit sel de métal de composé sulfonamide est sélectionné parmi les sels suivants : un sel de métal de benzènesulfonamide, un sel de métal de toluène-4-sulfonamide, un sel de métal de N-phényl-benzènesulfonamide, un sel de métal de N-phényl-4-méthyl-benzènesulfonamide ou un sel de métal de 1,2-benzisothiazol-3(2H)-un-1,1-dioxyde.

3. Utilisation selon la revendication 1 ou 2, dans laquelle ledit sel de métal de composé sulfonamide est un sel de sodium de 1,2-benzisothiazol-3(2H)-un-1,1-dioxyde.

4. Utilisation selon l'une quelconque des revendications précédentes, de sorte que ladite composition de résine polyester comprend entre 0,005 et 0,5 partie en masse du sel de métal de composé sulfonamide par rapport à 100 parties en masse d'une résine polyester.

5. Utilisation selon l'une quelconque des revendications précédentes, dans laquelle la composition de résine polyester est formée en un article moulé.

6. Utilisation selon la revendication 5, dans laquelle l'article moulé est un matériau isolant.

7. Utilisation selon la revendication 6, dans laquelle le matériau isolant est utilisé dans un composant électrique/électronique.
